# EUROPEAN PATENT APPLICATION

(11) **EP 1 245 898 A1**
(43) Date of publication of application: **02.10.2002**
(21) Application number: 01967760.8
(22) Date of filing: 20.09.2001
(51) Int. Cl.: F21V 7/20, F21V 19/00, F21V 29/00

(54) **LIGHTING DEVICE USING FLUORESCENT LAMP**

(30) Priority: 09.11.2000 JP 2000342609
(71) Applicant: Harison Toshiba Lightning Corporation, Imabari-shi, Ehime 794-0042 (JP)
(72) Inventor: OKI, Masahiro, Imabari-shi, Ehime 794-0054 (JP); NOGUCHI, Hidehiko, Imabari-shi, Ehime 794-0059 (JP)
(74) Representative: Schmidtchen, Jürgen Christian
(86) International application number: JP0108203
(87) International publication number: WO02039014

(57) **Abstract**

A transparent airtight vessel 1a, a discharge medium enclosed in a transparent airtight vessel 1a and composed mainly of rare gas, a fluorescent lamp 1 provided with at least a pair of electrodes 1b, 1e which generate discharge inside the transparent airtight vessel 1a, a reflection means 2 arranged in the vicinity of the fluorescent lamp 1, and a transparent resin 3 which exists between the fluorescent lamp 1 and the reflection means 2 and contacting with both of them. The transparent resin 3 conducts heat generated by the fluorescent lamp 1 to the reflection means 2 and promotes the heat radiation. The heat radiation of the rare gas discharge lamp is then promoted and the decrease of the light emitting efficiency is suppressed.

## Description

### FIELD OF INVENTION

The present invention relates to a lighting apparatus using fluorescent lamps in which a discharge medium consisting mainly of a rare gas is sealed, and especially to a backlight unit for liquid crystal display devices.

### BACKGROUND TECHNOLOGY

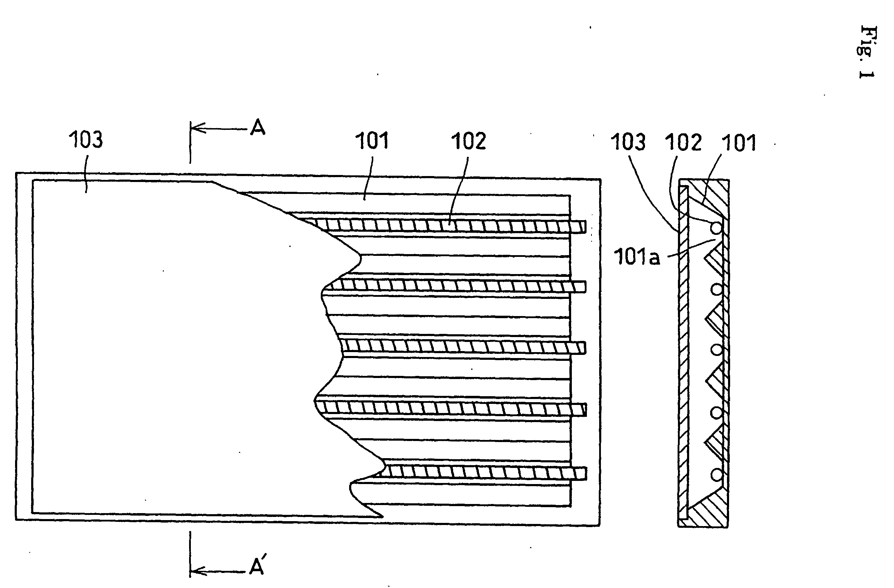

A conventional backlight unit for liquid crystal display devices is explained using Fig.1. Fig.1 shows the conventional backlight unit, Fig.1(a) is a front view a portion of which is cut, Fig.1(b) is a cross section along the A-A' line of Fig.1(a).

In the figure, a reflection case 101 is made by forming white resin such as polycarbonate, in which a plurality of concave grooves 101a are formed on the inner surface thereof. In each of the concave grooves 101a, one fluorescent lamp 102 is placed respectively. A front surface of the reflection case 101, in which these fluorescent lamps 102 are stored, is covered with a diffusion plate 103.

The fluorescent lamp 102 is composed of a phosphor layer formed on the inner surface of a tubular glass tube, a pair of electrodes sealed inside of the glass tube at its both ends, and a discharge medium of a mercury gas including a rare gas such as neon or argon filled in the glass tube after it is evacuated.. The fluorescent lamp 102 generates visible light by exciting the phosphor with an ultra violet ray of wavelength 254nm radiated mainly by a low-pressure mercury vapor discharge.

The diffusion plate 103 also composed of a white resin such as polycarbonate is provided at an open end of the reflection case 101 to provide uniform brightness at an illumination surface of the backlight unit.

Since such conventional backlight unit uses the mercury fluorescent lamp 102 utilizing the low-pressure mercury vapor discharge as mentioned above, it is able to generate required intensity of radiation using relatively small amount of electric power. However, since mercury pollutes the environment when being abandoned, a rare gas fluorescent lamp is attracting attention using the low-pressure discharge of such rare gas as xenon etc. instead of mercury.

However, since such rare gas fluorescent lamp has the light emitting efficiency of less than 50% compared with the mercury discharge lamp, an electric power of more than twice as much as that of the mercury discharge lamp is necessary to get the same brightness as the latter. As a result, the rare gas fluorescent lamp produces heat more than twice as much as that of the mercury discharge lamp.

Generally, there is a problem that the rare gas discharge lamp or the fluorescent lamp decreases the light emitting efficiency with the increase of the lamp temperature. When the electric power of more than twice as much as that of the mercury discharge lamp is supplied to get necessary quantity of light as mentioned above, the lamp temperature rises extremely high decreasing the light emitting efficiency and the necessary quantity of light cannot be obtained.

There is also a problem that when the lamp temperature rises, the plastic reflection case 101 or the diffusion plate 103 changes its color from white to yellow, resulting in decrease of the reflection factor or a transmission factor, and the decrease of the brightness of the backlight.

The color change of the plastic reflection case 101 or the diffusion plate 103 is caused partly by the ultraviolet ray radiated from the fluorescent lamp.

Therefore, an object of the present invention is to supply a lighting apparatus using a discharge lamp in which decrease in the light emitting efficiency caused by the heat of rare gas fluorescent lamps and in brightness of the lighting apparatus caused by the color change of the reflection case or the diffusion plate are suppressed.

### DISCLOSURE OF THE INVENTION

The lighting apparatus using the discharge lamp according to the present invention includes a fluorescent lamp composed of a long and narrow transparent airtight vessel, a medium mainly consisting of a rare gas sealed in the transparent airtight vessel, and electrodes for generating discharge in the transparent airtight vessel. The lighting apparatus also has a reflection means arranged in the vicinity of the fluorescent lamp and a transparent resin provided between the reflection means and the fluorescent lamp so as to contact with both of them.

Also in the lighting apparatus using the fluorescent lamp according to the present invention, the transparent resin has an absorption band which absorbs lights having a wavelength of 300 ∼420 nm.

Further, in the lighting apparatus using the fluorescent lamp of according to the present invention, the transparent resin is silicone.

Further, in the lighting apparatus using the fluorescent lamp of according to the present invention, the transparent resin is supplied in a liquid state between the discharge lamp and the reflection means, which is thereafter solidified to contact with both of them.

Further, in the lighting apparatus using the fluorescent lamp of according to the present invention, the reflection means has a plurality of long and narrow grooves for receiving the discharge lamps, and the transparent resin is provided in these grooves.

Further, in the lighting apparatus using the fluorescent lamp of according to the present invention, the fluorescent lamps are buried in the transparent resin.

Further, in the lighting apparatus using the fluorescent lamp of according to the present invention, the electrodes of the fluorescent lamps are composed of inner electrodes provided at the end of the transparent airtight vessel, and outer coiled electrodes wound around the outer surface of the transparent vessel.

Also, the lighting apparatus using the fluorescent lamp of according to the present invention has a fluorescent lamp arrangement composed of a plurality of fluorescent lamps which sealed a discharge medium mainly composed of rare gas in a long and narrow transparent airtight vessel with a phosphor layer inside thereof, and electrodes which are provided in the transparent airtight vessel so as to generate discharge in said transparent airtight vessel. The lighting apparatus also includes a diffusion plate provided in front of the fluorescent lamp arrangement, a reflection means on the back of the fluorescent lamp arrangement and a transparent resin provided between the each fluorescent lamp and the reflection means, which are in contact with both of them.

Further, in the lighting apparatus using the fluorescent lamp according to the present invention, the transparent resin has an absorption band absorbing lights having a wavelength of 300∼420 nm.

Further, in the lighting apparatus using the fluorescent lamp according to the present invention, the transparent resin is silicone resin.

Further, in the lighting apparatus using the fluorescent lamp according to the present invention, the transparent resin is supplied in a liquid state between the fluorescent lamp and the reflection means and is afterward hardened to contact with both of them.

Further, in the lighting apparatus using the fluorescent lamp according to the present invention, the reflection means is provided with a plurality of long and narrow grooves for storing the fluorescent lamps, and the transparent resin is provided in these grooves.

Further, in the lighting apparatus using the fluorescent lamp according to the present invention, the fluorescent lamps are buried in the transparent resin.

Further, in the lighting apparatus using the fluorescent lamp according to the present invention, the electrodes of the fluorescent lamps are composed of an inner electrode provided at the end of the transparent airtight vessel, and a coil like outer electrode wound around the outer surface of the transparent airtight vessel.

Also, the lighting apparatus using the fluorescent lamps according to the present invention has a fluorescent lamp arrangement composed of a plurality of fluorescent lamps which encloses a discharge medium mainly composed of a rare gas in a long and narrow transparent airtight vessel with a phosphor layer inside thereof, and electrodes which are provided in the transparent airtight vessel so as to generate discharge in the transparent airtight vessel. The lighting apparatus also includes a dish like reflection plate with substantially flat bottom arranged on the back of these fluorescent lamp arrangement, a diffusion plate provided in front of the fluorescent lamp arrangement, and a transparent resin arranged between the flat bottom of the reflection plate, which is in contact with both of them.

Further, in the lighting apparatus using the fluorescent lamp according to the present invention, at least one of the reflection plate and the diffusion plate is composed of white synthetic resin.

Further, in the lighting apparatus using the fluorescent lamp according to the present invention, the transparent resin has an absorption band for absorbing lights having a wavelength of 300 ∼420 nm.

Further, in the lighting apparatus using the fluorescent lamp according to the present invention, the transparent resin is silicone resin.

Further, in the lighting apparatus using the fluorescent lamp according to the present invention, the transparent resin is supplied between the fluorescent lamp and the reflection plate in a liquid state and afterward is hardened in contact with both of them.

Further, in the lighting apparatus using the fluorescent lamp according to the present invention, the transparent resin is composed of a long and narrow resin block on which a concave portion for storing the fluorescent lamp is formed along the longitudinal direction of the block.

Further, in the lighting apparatus using the fluorescent lamp according to the present invention, the diffusion plate, the fluorescent lamp arrangement, the resin block and the reflection plate are stored in this order in a box like case having an open front face, and a support plate is fixed in the case having notches for being penetrated by the fluorescent lamp and the resin block for storing the fluorescent lamp.

Further, in the lighting apparatus using the fluorescent lamp according to the present invention, at least the reflection surface of the reflection plate is composed of a metal.

According to the present invention described, since a transparent resin is provided, which is in contact with the discharge lamp or the fluorescent lamp and the reflection means, heat generated by the discharge lamp or the fluorescent lamp is radiated by the reflection means. Thus, the excessive temperature rise is suppressed and the light-emitting efficiency is increased. The change in a color into yellow of the reflection means or the diffusion plate is prevented, which decreases the luminance of the lamp.

Also, according to the present invention, the transparent resin has an absorption band in the wavelengths of 300 ∼ 420 nm, near-ultraviolet ray radiated from the discharge lamp or the fluorescent lamp is absorbed by the transparent resin. Thus, the color change to yellow of the diffusion plate or the reflection plate of the resin is reduced and the optical characteristics of the lighting apparatus are improved.

### BRIEF DESCRIPTION OF THE DRAWINGS

Fig.1 is a front view with a part cut and a cross section along the A-A' line, showing a conventional backlight unit.
Fig.2 is a front view with a part cut and a cross section along the A-A' line, showing a backlight unit, which is a first embodiment of the present invention.
Fig.3 is a side view showing a fluorescent lamp used in the backlight unit shown in Fig.1 with a lighting circuit.
Fig.4 is a graph showing spectroscopic transmittance of silicone resin used in the backlight unit shown in Fig.1.
Fig.5 is a graph showing the luminance preservation rate of the backlight unit shown in Fig.1 comparing with that of the comparison example.
Fig.6 is a graph showing the variation of tint x of the backlight unit shown in Fig.1 comparing with that of the comparison example.
Fig.7 is also a graph showing the variation of tint y of the backlight unit shown in Fig.1 comparing with that of the comparison example.
Fig.8 is a front view with a part cut and a section along the A-A' line showing the backlight unit which is a second embodiment of the present invention.
Fig.9 is a side view showing a discharge lamp used in the backlight unit shown in Fig.8 together with a lighting circuit.
Fig.10 is a front view with a part cut and a section along the A-A' line showing the backlight unit which is a third embodiment of the present invention.
Fig.11 is a front view with a part cut and a section along the A-A' line showing the backlight unit which is a fourth embodiment of the present invention.
Fig.12 is a front view with a part cut and a section along the A-A' line showing the backlight unit, which is a fifth embodiment of the present invention.

### DETAILED DESCRIPTION OF THE INVENTION

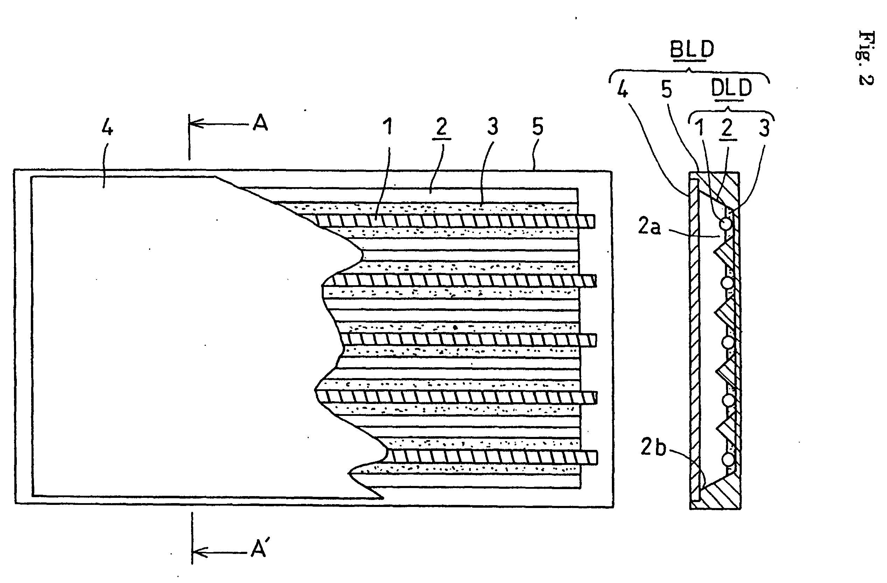

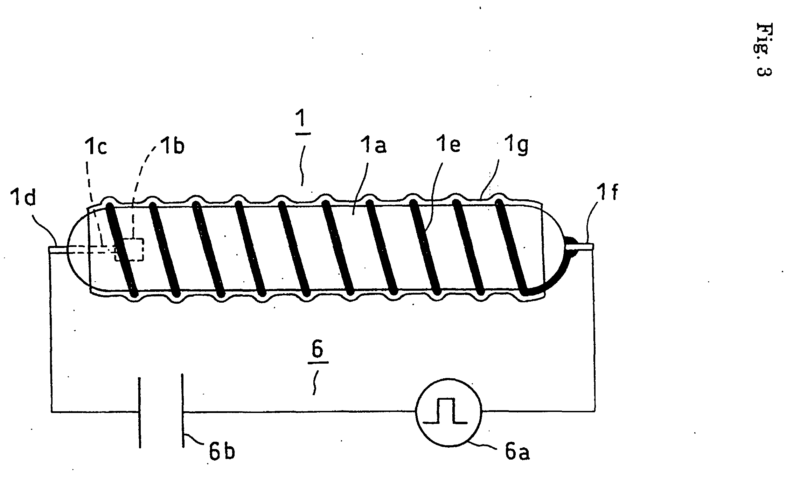

Embodiments of the invention will be explained in detail referring to the figures. Fig.2 is a front view with a part cut and a cross section along the A-A' line, showing a backlight unit which is a first embodiment according to the present invention. Fig.3 is a side view showing a fluorescent lamp used in the backlight unit together with a lighting circuit.

In each figures, a fluorescent lamp device DLD is composed of a fluorescent lamp 1, a transparent resin 3 and a reflection means 2. A backlight unit BLD is composed of a right under style backlight unit, which is composed of the fluorescent lamp device DLD, a diffusion plate 4, a case 5, and a lighting circuit 6.

The fluorescent lamp 1 is composed of a transparent airtight vessel 1a, an inner electrode 1b, an inner lead wire 1c, an outer lead wire 1d, an outer electrode 1e, a discharge medium, a phosphor layer, a lead wire 1f, and a transparent insulating coating 1g.

The transparent airtight vessel 1a is composed of , for example, a long and narrow valve made of hard glass with an outer diameter of 1.6∼10 mm, a thickness of 0.1∼0.7 mm and a length of 50∼700 mm. A long and narrow discharge space 1a1 is formed inside the valve.

The inner electrode 1b is composed of, for example, a cold cathode made of Ni alloy having a cylindrical shape with an open end, an inner diameter of 2.0 mm and a length of about 4 mm. The cold cathode is welded to and supported by an end of the inner leading wire 1c made of Kovar and is sealed inside the transparent airtight vessel 1a at its end.

The outer leading wire 1d is made of Kovar wire and is extended to the inner leading wire 1c forming one body therewith. The outer lead 1d is sealed at one end of the transparent airtight vessel 1a with one end of which being extended outside the transparent airtight vessel 1a.

The outer electrode 1e is composed of a coil formed with a metal wire, and is provided in a middle part of the transparent airtight vessel 1a leaving spaces of 1∼5 mm at both ends of the transparent airtight vessel 1a. The coil is formed by winding a metal wire made of Ni or Cu etc. having a diameter of 0.05∼0.4 mm, at a pitch of 0.1∼10 mm around the outer surface of the transparent airtight vessel 1a. An inner surface of the coil is in contact with the outer surface of the transparent airtight vessel 1a. To form the coil of the outer electrode 1e, the wire is wound around the transparent airtight vessel 1a by rotating the transparent airtight vessel 1a or by rotating the metal wire around the transparent airtight vessel 1a and wound.

The discharge medium is composed mainly of xenon, and sealed in a discharge space 1a1 of the transparent airtight vessel 1a.

The phosphor layer is, not illustrated, composed of phosphor emitting light having three wavelengths, and is formed in the middle area of a discharge space 1a1 formed inside the transparent airtight vessel 1a leaving both end portions thereof.

The lead wire 1f is provided at the other end of the transparent airtight vessel 1a so that a base end should not be exposed in the discharge space 1a1, and that the other end of the lead wire 1f is connected to the outer electrode 1e.

The transparent insulating coating 1g is composed of a transparent heat shrinkage tube made of fluorine resin, is provided to coat the transparent airtight vessel 1a from outside of the outer electrode 1e to insulate and mechanically fix the outer electrode 1e.

The reflection means 2 is made of a white polycarbonate resin sheet and is provided with five concave grooves 2a, which were integrally formed with each other. The reflection means 2 has a dish like shape, as a whole, with an open-end 2b, which forms a light emitting face. The fluorescent lamp 1 is stored in each concave grooves 2a.

The transparent resin 3 is made of transparent silicone resin, which is in contact with the fluorescent lamp 1 and the inner surface of the concave groove 2a of the reflecting means 2 in a manner that a backside half of the fluorescent lamp 1 is buried in the silicone resin. The fluorescent lamp 1 is thus fixed in the concave groove of reflecting means 2 with a portion of the fluorescent lamp 1 being buried in the transparent resin 3. Here, DC1-2577 made by Toray-Dow Corning silicone Co. is used as the silicone resin.

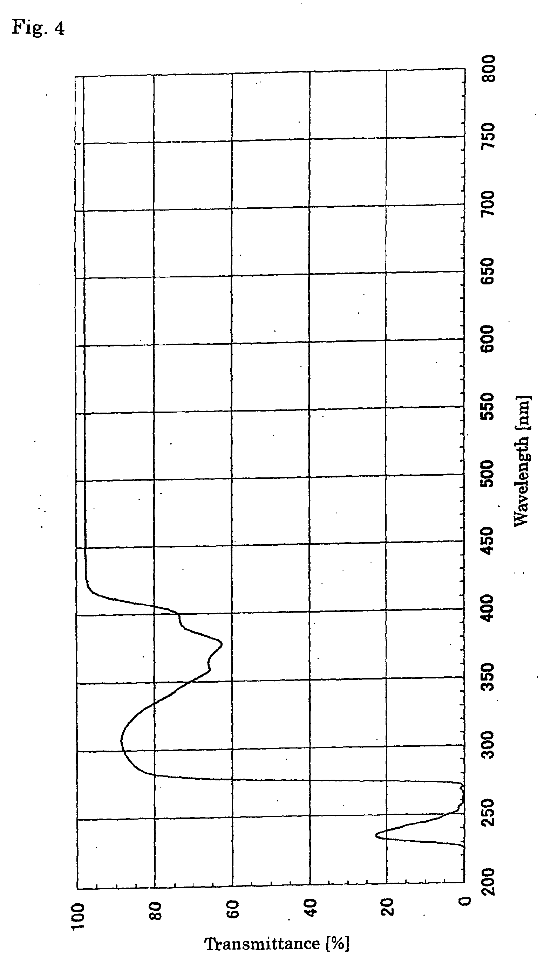

The spectral transmittance of the silicone resin is shown in Fig.4. In this figure, the abscissa indicates the wavelength of the light, and the ordinate indicates the transmittance in %. As it is clear from the graph, the absorption wavelength band of the silicone resin is from 300 nm to 420 nm. The existence of the absorption wavelength band enables to absorb the ultraviolet ray emitted from the fluorescent lamp 1.

The diffusion plate 4 is so arranged as to close the open-end 2b of the reflection means 2 and to form a light-emitting surface in front of the diffusion plate 4.

The case 5 stores and protects the fluorescent lamp 1, the reflection means 2, the transparent resin 3, and the diffusion plate 4, making it easy to incorporate the backlight unit into such an appliance as a computer display set.

The lighting circuit 6 is composed of a high frequency power source 6a and a capacitor C, in which one of the output ends of the power source 6a is connected with the inner electrode 1b through the capacitor C and the outer leading wire 1d, while the other end is connected with the outer electrode 1e through the lead wire 1f. The high frequency power source 6a mainly includes a high frequency inverter, which generates a rectangular wave pulse voltage as an output thereof.

In the backlight unit thus composed, when a predetermined pulse voltage is applied between the inner electrode 1b and the outer electrode 1e of the fluorescent lamp 1 from the lighting circuit 6, a dielectric barrier discharge is generated in the discharge space 1a1 which lies between both electrodes 1b and 1e, wherein enclosed discharge medium of xenon emits an ultraviolet ray mainly including a wavelength of 147 nm corresponding to a resonant line of xenon and a wavelength 172 nm corresponding to a molecular emission of xenon. The ultraviolet ray illuminates the phosphor layer, exciting the phosphor to emit visible light. The visible light thus emitted is led out through gaps formed between each turn of the coil forming the outer electrode 1e. The visible light led out from nearly whole circumference of the tubular transparent airtight vessel 1a is diffused and emitted through the front diffusion plate 4 by the reflection means 2. That is, a part of the visible light emitted from the fluorescent lamp 1 enters directly on the diffusion plate 4 and the rest of the visible light is reflected by the reflection means 2 enters on the diffusion plate 4 through the open edge 2b. The visible light incident on the diffusion plate 4 from backside is diffused inside and emits from the front surface of the diffusion plate 4, which forms a front emitting plane, thereby enabling to be used as a light source of the backlight unit.

Here, the generated heat by the fluorescent lamp 1 is conducted to the transparent resin 3, which is in contact with the back-side of the fluorescent lamp 1, and is further conducted to the reflection means 2, thereby promoting heat radiation. As a result, the temperature rise of the fluorescent lamp 1 is suppressed. Accordingly, the temperature of the air layer surrounded by the reflection means 2 and the diffusion plate 4 is lowered, and the air layer suppresses the temperature rise of the reflection means 2 and the diffusion plate 4.

Further, a portion of near-ultraviolet ray, which is emitted outside from the fluorescent lamp 1 and incident on the reflection means 2 is absorbed by the transparent resin 3. Almost all portion of the near-ultraviolet ray thus reaches to the reflection means 2. Similarly, since the light incident on the diffusion plate 4 consists of the light reflected by the reflection means 2 and the light directly incident, and the near-ultraviolet ray is scarcely contained in the reflected light, the near-ultraviolet ray is decreased as a whole.

Therefore, tarnish of the reflection means 2 or the diffusion plate 4 due to the heat and the ultraviolet ray is prevented, as well as the decrease of the light emitting efficiency of the fluorescent lamp 1 is prevented.

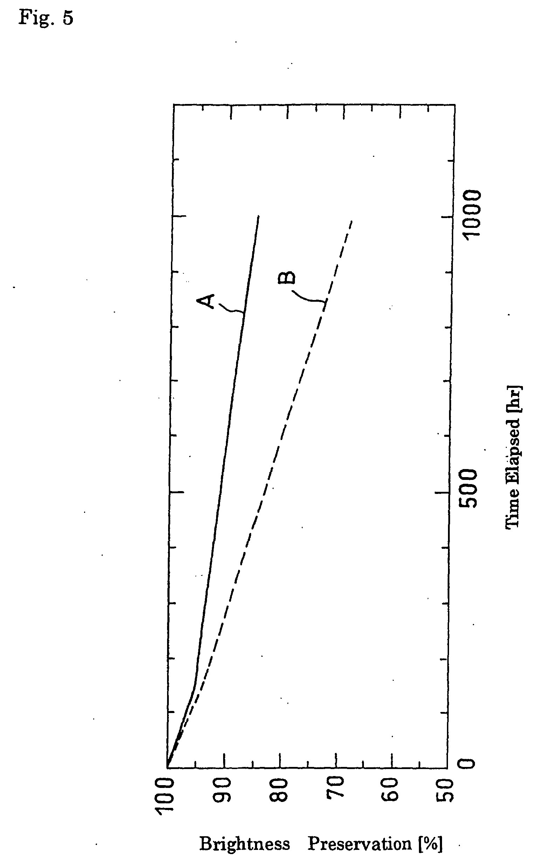

Fig.5 to Fig.7 are graphs comparatively showing optical characteristics of the embodiment of according to the present invention and those of a comparison example. Here, the comparison example has the same structure as the present embodiment except that the comparison example is not provided with the transparent resin. In each figure, the curve A indicates the characteristic of the embodiment according to the present invention, while the curve B that of the comparison example, respectively.

First, Fig.5 is a graph showing the brightness maintenance rate of the first embodiment together with that of the comparison example, in which the brightness decline rate is plotted against the lighting time. In the figure, the abscissa indicates the time elapsed (hour), the ordinate indicates the brightness maintenance rate (%), respectively. As is seen from the figure, the brightness maintenance rate at the time when 1000 hr has elapsed is about 85% with the embodiment of the present invention, while the rate with the comparison example is under about 70%, which means that the embodiment according to the present invention has evidently excellent brightness maintenance rate . It is also found that the efficiency of the embodiment according to the present invention is 5% higher than that of the comparison example.

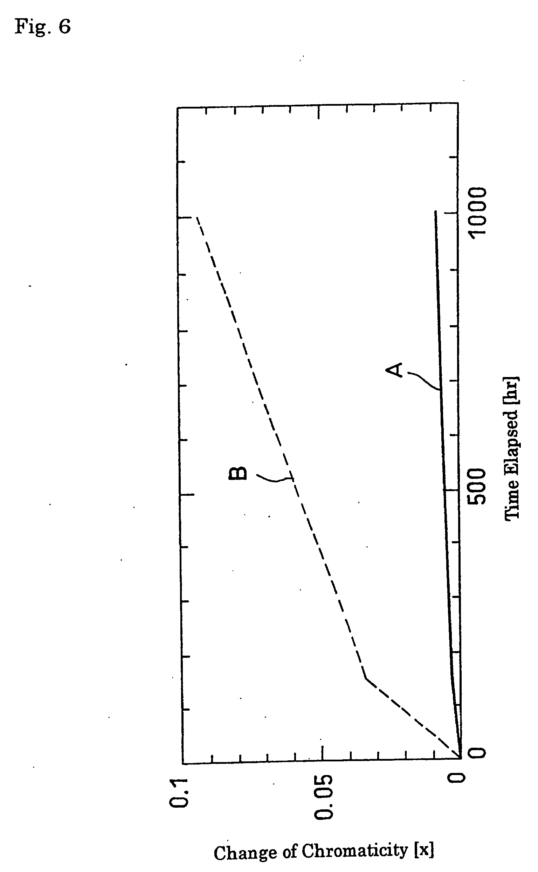

Fig.6 is a graph showing the change of the chromaticity X of the first embodiment according to the present invention together with that of the comparison example.

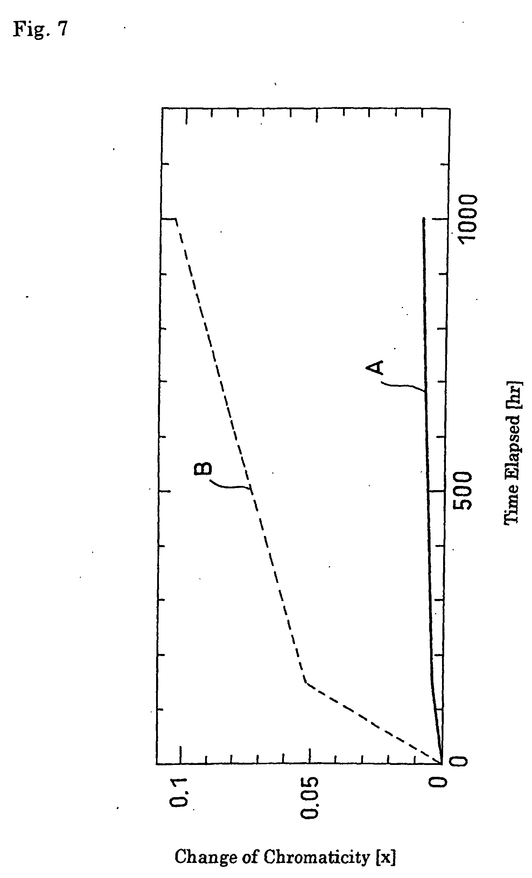

Fig.7 is a graph showing the change of the chromaticity Y of the first embodiment according to the present invention together with that of the comparison example.

In each figure, the abscissa indicates the lighting time (hour), and the ordinate indicates the change of the chromaticity (X) and (Y), respectively. As it is clear from each figure, the changes of the chromaticity X and Y in the embodiment according to the present invention are very low compared with those in the comparison example. The reason why the embodiment according to the present invention is superior to the comparison example as shown in Fig.5 to Fig.7 is that the near-ultraviolet ray is absorbed by the transparent resin as well as the heat radiation is promoted to lower the temperature, thereby resulting in lowering of the yellow change of reflection means 2 and the diffusion plate 4.

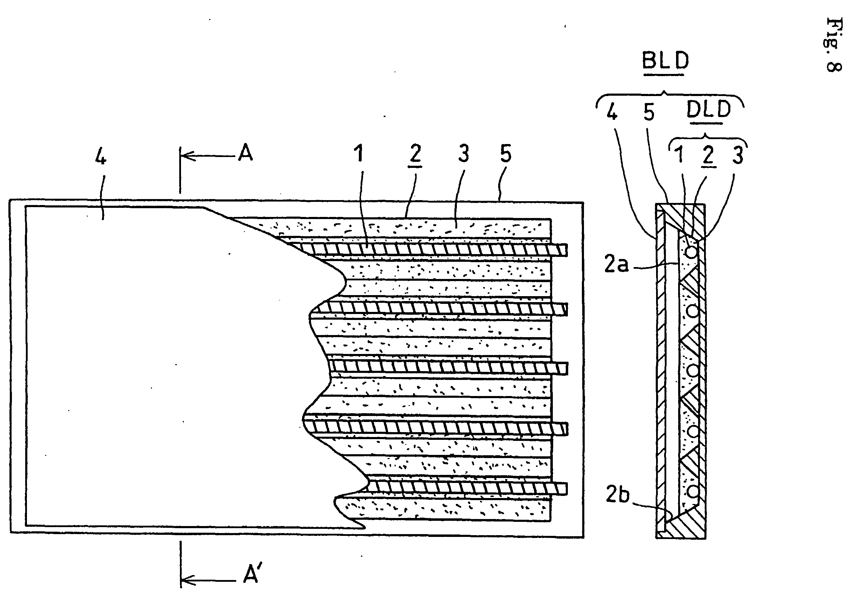

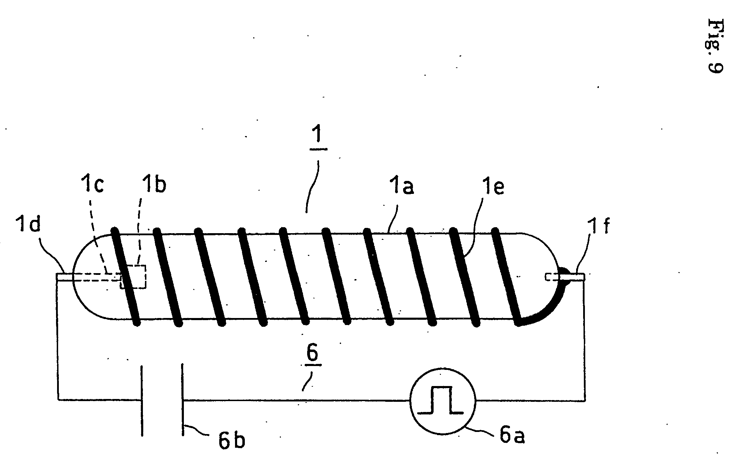

Next, a second embodiment according to the present invention is explained referring to Fig.8 and Fig.9. In each figure, the same symbols are assigned to the parts corresponding to those shown in Fig.2 and Fig.3 and detailed explanation is omitted. Thus, the following explanation will be focused on the differing parts.

Fig.8 is a front view with partially cut and a sectional view along the A-A' line of the backlight unit, which is the second embodiment of the present invention. Fig.9 is a side view showing a discharge lamp together with a lighting circuit used in the backlight unit.

The difference between the second embodiment and the first embodiment is the fluorescent lamp 1 and the transparent resin 3. That is, the fluorescent lamp 1 in the second embodiment is not provided with the transparent insulating coating 1g. Instead, whole fluorescent lamp 1 is buried in a transparent resin 3' as described later, so that the outer electrode 1e is fixed and insulated. As is shown in the sectional view of Fig.9, the transparent resin 3' is filled in the concave groove 2a of the reflection means 2 so as to bury the whole fluorescent lamp 1.

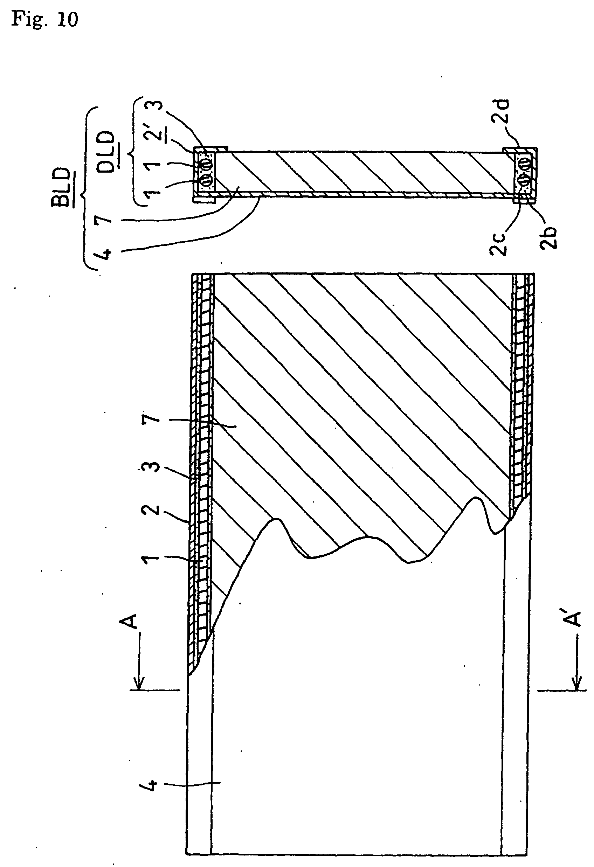

Fig.10 is a front view a portion of which is cut and a section along the A-A' line of the backlight unit according to a third embodiment of the present invention. In each figure, the same symbols are assigned to the parts corresponding to those shown in Fig.2 and Fig.3 and detailed explanation is omitted. Thus, the following explanation will be focused on the differing parts. This embodiment is different from those described above in that the backlight unit BLD is so called an edge type. That is, a translucent light conducting plate 7 made of translucent acrylic resin is used having edge portions on both sides of the plate 7, which form light incident faces. On the edge portions, a fluorescent lamp device DLD including a pair of discharge lamps is provided. A diffusion plate 4 is provided in front of the translucent light conducting plate 7. The front face of the diffusion plate 4 forms a light emitting face.

The fluorescent lamp device DLD has a reflecting means 2' of a gutter shape which grasps and holds the end face of the light conducting plate 7. The transparent resin 3 is filled in the gutter portion of the reflection means 2'. The fluorescent lamp 1 is buried with its whole portion inside the transparent resin 3. The reflection means 2' grasps and holds both sides of the translucent light conducting plate 7 with its both end portions 2c, 2d.

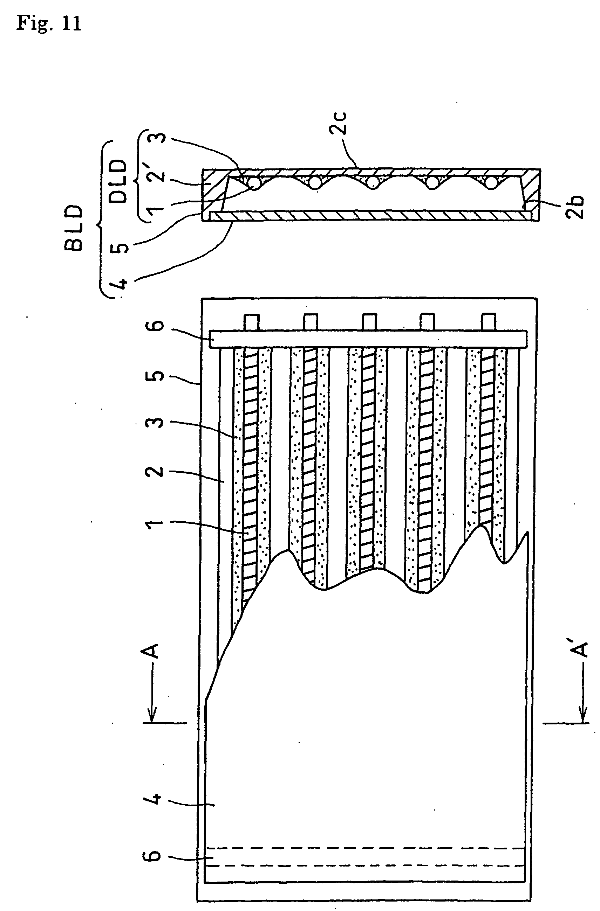

Fig.11 is a front view a portion of which is cut and a section along the A-A' line of the backlight unit according to a third embodiment of the present invention. In each figure, the same symbols are assigned to the parts corresponding to those shown in Fig.2 and Fig.3 and detailed explanation is omitted. Thus, the following explanation will be focused on the differing parts. This embodiment differs from the first and the second embodiment in that a reflection means includes a reflection plate 2' having a flat bottom portion 2c as a whole. This reflection plate 2' does not include such a groove as shown in the first and the second embodiment. However, the peripheral opening portion 2b of the reflection plate 2' is so inclined as to form something like a dish with a lower flat portion. The reflection plate 2' is made of a metal plate such as aluminum for good heat conduction, although it is not limited to aluminum. A plurality of fluorescent lamps 1 are fixed directly to the reflection plate 2' by the transparent resin 3. That is, the transparent resin 3 in a liquid state is supplied to each position on the reflection plate bottom 2' on which each fluorescent lamps 1 is placed and is hardened to be fixed.

A fluorescent lamp 1, on the surface of which transparent insulating coating (not illustrated) is provided, are used as in the first embodiment.

In the backlight unit of the present embodiment, the heat radiation of the discharge lamp is promoted. As a result, the light-emitting efficiency of the lamp itself is improved and the color change into yellow of the reflection plate 2' or the diffusion plate 4 is prevented, as is the case with the embodiments described above. Particularly when the reflection plate 2' is made of a metal plate, the color change does not occur. Also, according to the present embodiment, the reflection plate 2 is easily made with low price because it has a simple flat shape.

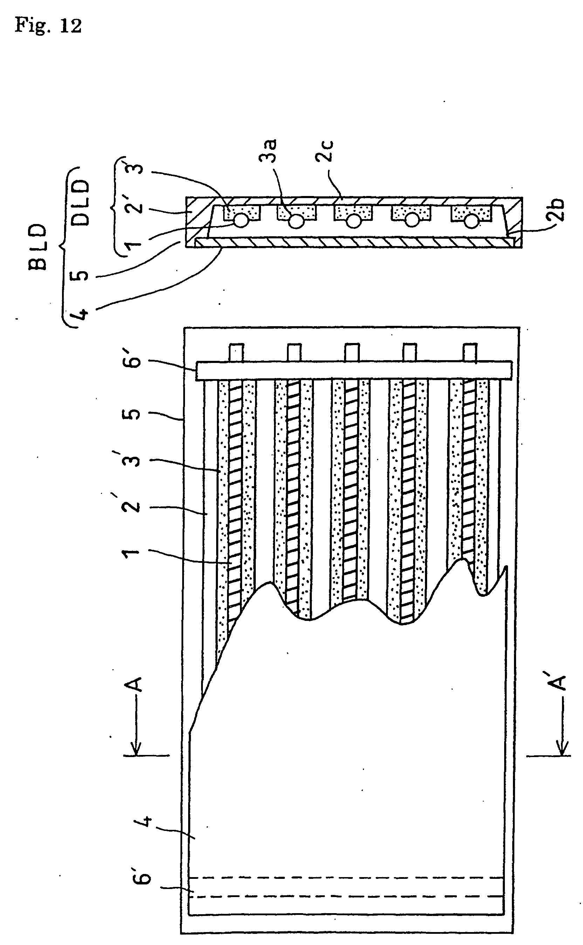

Fig.12 is a front view a portion of which is cut and a section along the A-A' line of the backlight unit according to a third embodiment of the present invention. In each figure, the same symbols are assigned to the parts corresponding to those shown in Fig.2, Fig.3 or Fig.11 and detailed explanation is omitted. Thus, the following explanation will be focused on the differing parts. In this embodiment, a reflection means is composed of a reflection plate 2' having, as a whole, a flat plane bottom 2c, which is similar to those in the first, the second and the fourth embodiment, but includes a transparent resin, which has a different structure from those in these embodiments. Specifically, in the present embodiment as shown in Fig.12, a long and narrow rectangular solid transparent resin block 3' is used, on which a concave groove 3a having a circular arc section is formed along its longitudinal direction. A plurality of these transparent resin blocks 3' are arranged in the positions on the bottom of the reflection plate 2', where the fluorescent lamps 1 are placed, thereby storing the fluorescent lamps 1 in each concave grooves 3a. A plurality of transparent resin blocks 3', in which the fluorescent lamp is stored, are fixed on the bottom of the reflection plate 2' by the support plate 6' fixed on the both ends of the case 5, as shown in Fig.12. The support plate 6' lies in a direction perpendicular to the longitudinal direction of the fluorescent lamp 1. A plurality of notches (not illustrated) are formed, through which the transparent resin blocks 3' penetrate, which receive the fluorescent lamp 1. The notches have open lower ends. The transparent resin blocks 3', in which fluorescent lamp 1 is stored, are arranged on the bottom of reflection plate 2'. The support plate 6' is then placed down from upside of the transparent resin blocks 3',each of which is thus fixed by being inserted in each notches. Further, discharge lamps are used in this embodiment, as in the first embodiment, having a transparent insulating coating (not illustrated) made of a transparent heat shrinkage tube.

By the support plate 6' thus structured, in which each transparent resin block 3' is made in contact with both the fluorescent lamp 1 and the bottom of the reflection plate 2', the heat generated by the fluorescent lamp 1 is transmitted to the reflection plate 2' through the transparent resin block 3' and is radiated.

In the backlight unit according to the embodiment, as in the fourth embodiment described, the light emitting efficiency of the lamp itself is improved because the heat radiation of the fluorescent lamp is promoted. At the same time, the color change into yellow of the reflection plate 2' or the diffusion plate 4 is prevented. Moreover, because the structure of the reflection plate is simple and the fluorescent lamp 1 is mechanically fixed to the bottom of reflection plate 2', the backlight unit of the embodiment can be easily manufactured with low cost.

Although various embodiments have been explained above, this invention is not limited to these embodiments, but various variations within the scope of the present invention can be applied.

Although the discharge lamps in the above embodiments are explained as the fluorescent lamps in which a phosphor layer is formed on the inner surface of a transparent airtight vessel, the discharge lamps can be used instead of the fluorescent lamp.

Also, the discharge medium of the fluorescent lamp used in the above embodiments, the present invention is not limited to such specified material as shown above, so far as it can be enclosed in a transparent airtight vessel and can emit radiation by the low-pressure rare gas discharge. For example, the discharge medium contains at least xenon and may contain either one or some combinations of neon, argon, krypton, helium and etc. if necessary. It is clear that xenon alone can be used as the discharge medium. Also, for a dielectric barrier type discharge using outer electrodes or inner and outer electrodes, rare gas halide such as KrF, ArCl, etc. or halogen itself may be added to the rare gas. Iodine, bromine, chlorine can be used as a halogen compound. If the element exists as a vapor from several hundred Pa to 1 MPa, the discharge can be generated. However, when the discharge lamp performs an arc discharge by inner electrode, it is preferable to use rare gas only.

Next, the phosphor layer is used for transforming of a wavelength from ultraviolet ray to visible ray, where the discharge media radiates the ultraviolet ray. The phosphor layer usually provided on the inner surface of the transparent airtight vessel. The phosphor layer may be formed along the whole inner circumference of the transparent airtight vessel, or may be provided so that a slit like aperture is formed along the longitudinal direction of the vessel. Further, the phosphor layer may be formed on a protection film, which interposes between the phosphor layer and the inner face of the transparent airtight vessel instead of forming directly on the inner face of the transparent airtight vessel.

Further, the phosphor may be composed of a kind of phosphor or of a mixture of plurality kinds of phosphor. For example, three-wavelength emission phosphor emitting white light, which is a mixture of phosphors each, emitting red, green, and blue light respectively, can be used. Also, a fluorescent lamp emitting a single color using a phosphor emitting either one of R(Red), G(Green), or B(Blue) light can be used.

Although a plurality of fluorescent lamps are used in the embodiments described above, a single fluorescent or a discharge lamp may be used for lighting devices in an embodiment according to the present invention.

Moreover, although the reflection means was explained as being made of resin or metal in the above embodiment, it may be made of conductive or non-conductive material. Although aluminum is used as the reflection means made of conductive material, also such metallic material as gold or silver etc. having good reflectivity, may be used, which is provided on a surface of abase body made of metal, or resin etc. in a form of a plating film, an evaporated film, or a foil.

On the other hand, the reflection means made of non-conducting material such as resin may be also made of white resin such as PC (polycarbonate), PET (polyethylene terephthalate) etc. for example. Here, the white resin may be formed into a reflecting sheet, and then it may be stuck on the surface of the base body. In this case, although the whole base body may be made by the white resin, however, a reflective film containing white pigment such as titan oxide particles can be applied on the surface of an insulating base body.

Further, the reflection means can be made in an arbitrary shape so as to obtain desired reflection characteristics by forming the reflection plane in such a shape as a paraboloid, an ellipsoid, or a spherical surface etc. The reflection plane of the reflection means can be either a mirror surface or a light-diffusing surface.

Although the transparent silicone resin is used in the embodiment described above, other resin material can be used. However, it is preferable that the resin has translucency for not interrupting the light emission of the fluorescent lamp, or transparency, since the resin lies between the fluorescent lamp and the reflection means being in contact with both of them. The transparent resin with high heat conductivity is suitable in order to quickly radiate heat through thermal conduction from the fluorescent lamp. This transparent resin may be either one, which is simply in contact with the fluorescent lamp and the reflection means to perform heat conduction there between, or one, which provide an adhesive effect to stick them together. In case of the latter, some cushion effect is obtained there between because the transparent resin has the moderate elasticity. Although the fluorescent lamp has a coil shaped outer electrode in the above embodiment, it is possible to use a fluorescent lamp with a pair of inner electrodes or a discharge lamp with a pair of belt-shaped electrodes, which are formed on the outer surface of a long and narrow transparent airtight vessel along its length.

## Claims

**1.** A lighting apparatus using a fluorescent lamp comprising;
a fluorescent lamp composed of a long and narrow transparent airtight vessel, a medium mainly consisting of a rare gas sealed in said transparent airtight vessel, and electrodes for generating discharge in said transparent airtight vessel,
a reflection means arranged in the vicinity of said fluorescent lamp, and
a transparent resin provided between said reflection means and said fluorescent lamp so as to contact with both of them.

**2.** A lighting apparatus using a fluorescent lamp according to claim 1, wherein said transparent resin has an absorption band which absorbs lights having a wavelength of 300 ∼420 nm.

**3.** A lighting apparatus using a fluorescent lamp according to claim 2,wherein said transparent resin is a silicone resin.

**4.** A lighting apparatus using a fluorescent lamp according to claim 3, wherein said transparent resin is supplied in a liquid state between the discharge lamp and the reflection means, which is thereafter solidified in contact with both of them.

**5.** A lighting apparatus using a fluorescent lamp according to claim 4, wherein said reflection means has a plurality of long and narrow grooves for receiving the discharge lamps, and said transparent resin is provided in said grooves.

**6.** A lighting apparatus using a fluorescent lamp according to claim 5, wherein said fluorescent lamps are buried in said transparent resin.

**7.** A lighting apparatus using a fluorescent lamp according to claim 5, wherein said electrodes of the fluorescent lamps are composed of inner electrodes provided at the end of the transparent airtight vessel, and an outer coiled electrodes wound around said outer surface of the transparent vessel.

**8.** A lighting apparatus using a fluorescent lamp comprising;
a fluorescent lamp arrangement composed of a plurality of fluorescent lamps which enclosed a discharge medium mainly composed of rare gas in a long and narrow transparent airtight vessel with a phosphor layer inside thereof, and electrodes which are provided in said transparent airtight vessel so as to generate discharge in said transparent airtight vessel,
a diffusion plate provided in front of said fluorescent lamp arrangement,
a reflection means on the back of said fluorescent lamp arrangement, and
a transparent resin provided between said each fluorescent lamp and the reflection means, which are in contact with both of them.

**9.** A lighting apparatus using a fluorescent lamp according to claim 8, wherein said transparent resin has an absorption band absorbing lights having a wavelength of 300∼420 nm.

**10.** A lighting apparatus using a fluorescent lamp according to claim 9, wherein said transparent resin is a silicone resin.

**11.** A lighting apparatus using a fluorescent lamp according to claim 10,wherein said transparent resin is supplied in a liquid state between said fluorescent lamp and said reflection means and is afterward hardened to contact with both of them.

**12.** A lighting apparatus using a fluorescent lamp according to claim 11, wherein said reflection means is provided with a plurality of long and narrow grooves for storing said fluorescent lamps, and said transparent resin is provided in said grooves.

**13.** A lighting apparatus using a fluorescent lamp according to claim 12, wherein said fluorescent lamps are buried in said transparent resin.

**14.** A lighting apparatus using a fluorescent lamp according to claim 12, wherein said electrodes of the fluorescent lamps are composed of an inner electrode provided at the end of said transparent airtight vessel, and a coil like outer electrode wound around the outer surface of said transparent airtight vessel.

**15.** A lighting apparatus using a fluorescent lamp comprising;
a fluorescent lamp arrangement composed of a plurality of fluorescent lamps which encloses a discharge medium mainly composed of rare gas in a long and narrow transparent airtight vessel with a phosphor layer inside thereof, and electrodes which are provided in said transparent airtight vessel so as to generate discharge in said transparent airtight vessel,
a dish like reflection plate with substantially flat bottom arranged on the back of said fluorescent lamp arrangement,
a diffusion plate provided in front of said fluorescent lamp arrangement, and
a transparent resin arranged between the flat bottom of said reflection plate, which is in contact with both of them.

**16.** A lighting apparatus using the fluorescent lamp according to claim 15, wherein at least one of the reflection plate and the diffusion plate is composed of a white synthetic resin.

**17.** A lighting apparatus using a fluorescent lamp according to claim 16, wherein said the transparent resin has an absorption band for absorbing light having a wavelength of 300∼420 nm.

**18.** A lighting apparatus using a discharge lamp according to claim 17, wherein said transparent resin is a silicone resin.

**18.** A lighting apparatus using a fluorescent lamp according to claim 15, wherein said the transparent resin is supplied between said fluorescent lamp and the reflection plate in a liquid state and afterward is hardened in contact with both of them.

**19.** A lighting apparatus using a discharge lamp according to claim 18, wherein said transparent resin is composed of a long and narrow resin block on which a convex portion for storing the fluorescent lamp is formed along the longitudinal direction of said block.

**20.** A lighting apparatus using a discharge lamp according to claim 19, wherein said diffusion plate, said fluorescent lamp arrangement, said resin block and said reflection plate are stored in this order in a box like case having an open front face, and a support plate is fixed in said case having notches for being penetrated by said fluorescent lamp and said resin block for storing said fluorescent lamp.

**21.** A lighting apparatus using a fluorescent lamp according to any one of the claims from claim15 to claim 20, wherein at least said reflection plane of said reflection plate is composed of a metal.
